# EUROPEAN PATENT APPLICATION

(11) **EP 2 927 056 A1**
(43) Date of publication of application: **07.10.2015**
(21) Application number: 12889320.3
(22) Date of filing: 30.11.2012
(51) Int. Cl.: B60R 11/02, H04R 1/00

(54) **VEHICLE SOUND COLLECTION STRUCTURE, AND SOUND COLLECTION DEVICE**

(71) Applicant: TOYOTA JIDOSHA KABUSHIKI KAISHA, Toyota-shi, Aichi-ken, 471-8571 (JP)
(72) Inventor: KAWAMATA Shinya, Toyota-shi Aichi 471-8571 (JP)
(74) Representative: D Young & Co LLP
(86) International application number: PCT/JP2012/081183
(87) International publication number: WO 2014/083702

(57) **Abstract**

A sound collection device 1 collects a sound using a microphone 3 and includes a guide portion 6 configured to guide a sound generated from a target object to the microphone 3 and a discharge portion 7 configured to facilitate the discharge of a foreign material, which gets into the guide portion 6, to the outside of the guide portion 6. Even when a foreign material, such as rain or dust which is to get into the microphone 3, reaches the guide portion 6, the discharge portion 7 is configured to discharge the foreign material to the outside of the guide portion 6. Therefore, it is possible to prevent an object, such as rain or dust, from being accumulated in the vicinity of the microphone 3, and to prevent the object from getting into the microphone 3. As a result, it is possible to improve the sound collection performance.

## Description

### Technical Field

The present invention relates to a vehicle sound collection structure and a sound collection device.

### Background Art

A sound collection device including a plurality of sound collectors, each of which collects an ambient sound, specifies the position of a sound source (particularly, a traveling sound of a vehicle) on the basis of the arrival time difference between the sounds. Japanese Unexamined Utility Model (Registration) Application Publication No. 5-92767 discloses a device which removes frequency components in a low-frequency region and a high-frequency region from electric signals output from a plurality of microphones that are arranged at predetermined intervals to convert the electric signals into corrected electric signals, using a bandpass filter, and calculates the power of a predetermined frequency region, in which the characteristics of the traveling sound of the vehicle appear, from the corrected electric signals. Then, when the power level is greater than a predetermined value, the device determines that there is an approaching vehicle. In addition, the device removes an unnecessary noise component using the corrected electric signals to convert the electric signals into noise suppression signals, calculates the mutual correlation between the noise suppression signals of the plurality of microphones, and calculates the approach direction of the approaching vehicle from the arrival time difference where the correlation is the maximum.

### Citation List

### Patent Literature

[Patent Literature 1] Japanese Unexamined Utility Model (Registration) Application Publication No. 5-92767

### Summary of Invention

### Technical Problem

However, in the above-mentioned technique, when the sound collector is arranged in a front part of the vehicle, a foreign material, such as rain or dust, gets into a mounting portion of the sound collector. As a result, for example, rain or dust is accumulated and the performance of the sound collector is likely to deteriorate.

An object of the invention is to provide a vehicle sound collection structure and a sound collection device with an improved sound collection performance.

### Solution to Problem

That is, according to an aspect of the invention, there is provided a vehicle sound collection structure that collects a sound generated from a target object using a sound collector provided in a vehicle. The vehicle sound collection structure includes: a guide portion configured to guide the sound generated from the target object to the sound collector; and a discharge portion configured to facilitate the discharge of a foreign material, which gets into the guide portion, to the outside of the guide portion.

The vehicle sound collection structure according to the above-mentioned aspect of the invention includes the guide portion configured to guide the sound generated from the target object to the sound collector and the discharge portion configured to facilitate the discharge of the foreign material which gets into the guide portion. According to this structure, even when the foreign material, such as rain or dust that is to get into the sound collector, reaches the guide portion, the discharge portion is configured to discharge the foreign material to the outside of the guide portion. Therefore, it is possible to prevent the foreign material, such as rain or dust, from being accumulated in the vicinity of the sound collector. As a result, it is possible to prevent the foreign material from getting into the sound collector and to improve the sound collection performance.

The vehicle sound collection structure according to the above-mentioned aspect of the invention may further include a windshield portion configured to prevent wind from flowing to the sound collector. In this case, wind is less likely to flow to the sound collector and it is possible to further improve the sound collection performance.

In the vehicle sound collection structure according to the above-mentioned aspect of the invention, the guide portion may have a shape in which the guide portion becomes gradually wider from the sound collector to the outside. In this case, it is possible to simply form a structure for improving the sound collection performance.

According to another aspect of the invention, there is provided a vehicle sound collection structure that collects a sound generated from a target object using a sound collector provided in a vehicle. The vehicle sound collection structure includes a guide portion configured to guide the sound generated from the target object to the sound collector and includes a vehicle-front-side wall surface and a vehicle-rear-side wall surface which are opposite to each other across the sound collector. The vehicle-rear-side wall surface includes a portion that extends backward in a front-rear direction of the vehicle while extending from the sound collector to the outside.

In the vehicle sound collection structure according to the above-mentioned aspect of the invention, the guide portion includes the vehicle-front-side wall surface and the vehicle-rear-side wall surface which are opposite to each other across the sound collector, and the rear-side wall surface of the guide portion guiding a sound to the sound collector includes the portion that extends to the rear side with respect to the width direction of the vehicle. Therefore, the vehicle sound collection structure can discharge a foreign material, such as rain or dust that collides with the portion extending to the rear side, to the rear side of the vehicle while reliably collecting the sound generated from the target object. Therefore, it is possible to easily remove a foreign material, such as rain or dust, while preventing the foreign material from approaching the sound collector. As a result, it is possible to prevent the foreign material from getting into the sound collector and to improve the sound collection performance. The "vehicle-front-side wall surface and the vehicle-rear-side wall surface which are opposite to each other" means that the wall surfaces are opposite to each other in the horizontal sectional view of the vehicle sound collection structure. In addition, the wall surface may be a flat surface or a curved surface.

In the vehicle sound collection structure according to the above-mentioned aspect of the invention, the vehicle-front-side wall surface of the guide portion may extend to an anterolateral side of the vehicle. As such, when the front-side wall surface of the guide portion extends to the anterolateral side, it is possible to prevent wind from flowing from the front to the sound collector when the vehicle is traveling. Therefore, wind is less likely to flow to the sound collector and it is possible to further improve the sound collection performance.

In the vehicle sound collection structure according to the above-mentioned aspect of the invention, the guide portion may have a shape in which the guide portion becomes gradually wider from the sound collector to the outside. In this case, it is possible to simply form a structure for improving the sound collection performance.

In the vehicle sound collection structure according to the above-mentioned aspect of the invention, an angle formed between the vehicle-rear-side wall surface and the vehicle-front-side wall surface of the guide portion may be greater than 30 degrees and less than 60 degrees, and the sound collector may be directed to the anterolateral side such that the angle of the sound collector with respect to a width direction of the vehicle is greater than 0 degrees and less than 30 degrees. In this case, the direction and opening angle of the sound collector are set to optimum values, considering, for example, the angle of the target object with respect to the host vehicle, the distribution of the angle between crossroads, and the steering angle of the host vehicle. Therefore, it is possible to further improve the sound collection performance while reliably preventing a foreign material from getting into the sound collector.

According to still another aspect of the invention, there is provided a sound collection device that is provided at a predetermined position and collects a sound generated from a target object using a sound collector. The sound collection device includes: a guide portion configured to guide the sound generated from the target object to the sound collector; and a discharge portion configured to facilitate the discharge of a foreign material, which gets into the guide portion, to the outside of the guide portion when the sound collection device is provided at the predetermined position.

The sound collection device according to the above-mentioned aspect of the invention includes the guide portion configured to guide the sound to the sound collector and the discharge portion configured to facilitate the discharge of the foreign material which gets into the guide portion. According to this structure, even when the foreign material, such as rain or dust that is to get into the sound collector, reaches the guide portion, the discharge portion is configured to discharge the foreign material to the outside of the guide portion. Therefore, it is possible to prevent the foreign material, such as rain or dust, from being accumulated in the vicinity of the sound collector. As a result, it is possible to prevent the foreign material from getting into the sound collector and to improve the sound collection performance.

The sound collection device according to the above-mentioned aspect of the invention may further include a windshield portion configured to prevent wind from flowing to the sound collector. The guide portion may have a shape in which the guide portion becomes gradually wider from the sound collector to the outside. In this case, the same effect as that in the vehicle sound collection structure is obtained.

According to yet another aspect of the invention, there is provided a sound collection device that is provided at a predetermined position and collects a sound generated from a target object using a sound collector. The sound collection device includes a guide portion that includes wall surfaces which are opposite to each other across the sound collector. When the sound collection device is provided at the predetermined position, one of the opposite wall surfaces includes a portion that extends backward in a front-rear direction at the predetermined position while extending from the sound collector to the outside.

In the sound collection device according to the above-mentioned aspect of the invention, one of the opposite wall surfaces includes the portion that extends backward while extending from the sound collector to the outside. According to this structure, the sound collection device can discharge a foreign material, such as rain or dust that collides with the portion extending to the rear side, to the rear side while reliably collecting a sound. Therefore, it is possible to reliably remove a foreign material, such as rain or dust, while preventing the foreign material from approaching the sound collector. As a result, it is possible to prevent the foreign material from getting into the sound collector and to improve the sound collection performance.

In the sound collection device according to the above-mentioned aspect of the invention, when the sound collection device is provided at the predetermined position, the guide portion may be arranged such that one of the opposite wall surfaces of the guide portion extends to an anterolateral side. In addition, the guide portion may have a shape in which the guide portion becomes gradually wider from the sound collector to the outside. In this case, the same effect as that in the vehicle sound collection structure is obtained.

In the sound collection device according to the above-mentioned aspect of the invention, when the sound collection device is provided at the predetermined position, an angle formed between a rear-side wall surface and a front-side wall surface of the guide portion may be greater than 30 degrees and less than 60 degrees. The sound collector may be directed to the anterolateral side such that the angle of the sound collector with respect to a left-right direction at the predetermined position is greater than 0 degrees and less than 30 degrees. In this case, the direction and opening angle of the sound collector are set to optimum values, considering, for example, the angle of the target object with respect to the host vehicle, the distribution of the angle between crossroads, and the steering angle of the host vehicle. Therefore, it is possible to further improve the sound collection performance while reliably preventing a foreign material from getting into the sound collector.

### Advantageous Effects of Invention

According to the invention, it is possible to provide a vehicle sound collection structure and sound collection device with an improved sound collection performance.

### Brief Description of Drawings

Fig. 1 is a schematic diagram illustrating the structure of a sound collection device according to an embodiment.
Fig. 2 is a diagram illustrating the traveling path of a sound and an object in the sound collection device illustrated in Fig. 1.
Fig. 3 is a schematic diagram illustrating the structure of a sound collection device according to a modification example.
Fig. 4 is a schematic diagram illustrating the structure of a sound collection device according to a modification example.

### Description of Embodiments

Hereinafter, preferred embodiments of the invention will be described with reference to the accompanying drawings. In the following description, the same or equivalent components are denoted by the same reference numerals and the description thereof will not be repeated.

### (First Embodiment)

A sound collection device 1 according to a first embodiment collects an environmental sound (a sound outside a vehicle when the sound collection device 1 is provided in the vehicle) including a sound generated from an object to be detected, using a microphone 3, and includes a guide portion 6 that guides the sound to the microphone 3 and a discharge portion 7 that facilitates the discharge of a foreign material, such as rain or dust which gets into the guide portion 6, to the outside of the guide portion 6. In addition, the sound collection device 1 includes a windshield portion 8 that prevents wind from flowing to the microphone 3 from the front in the traveling direction of the vehicle.

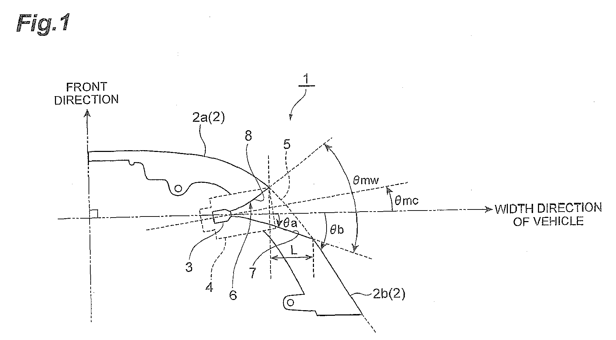

The sound collection device 1 has a vehicle sound collection structure which can collect a sound, such as a traveling sound of the vehicle that approaches from the anterolateral side and is likely to collide with the host vehicle. As illustrated in Fig. 1, the sound collection device 1 includes a bumper 2 of the vehicle, a casing 4 that holds the microphone 3, and a cover portion 5 that is provided along an outer circumferential surface of the bumper 2, in addition to the microphone 3.

The bumper 2 includes a front portion 2a that is located in front of the microphone 3 and forms a front part of the vehicle and a side portion 2b that extends obliquely rearward (the rear right side in Fig. 1) from the rear end of the front portion 2a through the cover portion 5. The same structures as the front portion 2a and the side portion 2b are also provided on the left side of the vehicle.

The microphone 3 has a function of converting a collected sound signal into an electric signal and transmits the electric signal to an electronic control unit (ECU) provided in the vehicle. The microphone 3 is directed to the anterolateral side such that the center of the microphone provided in the vehicle is inclined at an angle θ_{mc} with respect to the width direction of the vehicle (the right direction in the left-right direction of the vehicle). Here, the value of θ_{mc} is set considering the angle of another vehicle with respect to the host vehicle and is greater than 0 degrees and less than 30 degrees.

The casing 4 is attached between the front portion 2a and the side portion 2b by, for example, screws. The casing 4 is held in a right anterolateral direction such that the center of the microphone provided in the vehicle is inclined at the angle θ_{mc} with respect to the width direction of the vehicle (the right direction in the left-right direction of the vehicle).

The cover portion 5 is provided so that the microphone 3 and the casing 4 are not easily recognized from the outside and thereby the exterior design of the vehicle is improved. The cover portion 5 is arranged along the outer surface of the front portion 2a and the side portion 2b. The cover portion 5 has, for example, a mesh shape including micromeshes. The cover portion 5 may prevent a foreign material from getting into the microphone 3.

The guide portion 6 is opened in the anterolateral direction of the vehicle, with the microphone 3 and the casing 4 provided in the vehicle, and has a shape in which it becomes gradually wider from the microphone 3 to the outside. The guide portion 6 is formed by a cutout portion obtained by cutting out the rear end of the front portion 2a and the leading end of the side portion 2b and an inner wall surface of the casing 4 which is fitted to the cutout portion. The guide portion 6 includes a vehicle-front-side wall surface and a vehicle-rear-side wall surface which are opposite to each other across the microphone 3. The angle formed between the front-side wall surface and the rear-side wall surface of the guide portion 6 is θ_{mw}. Here, the value of θ_{mw} is set considering the distribution of the angle between crossroads and the distribution of the steering angle of the host vehicle and is greater than 30 degrees and less than 60 degrees. In addition, the guide portion 6 may be directed downward with respect to the horizontal direction so as to prevent a foreign material, such as rain or dust, from getting into the microphone.

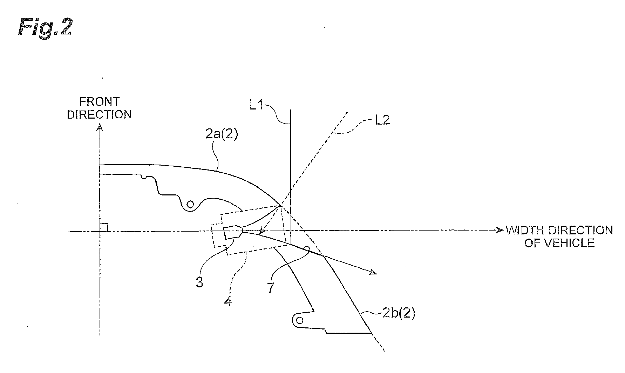

The rear-side wall surface of the guide portion 6 extends to the rear side with respect to the width direction of the vehicle. The wall surface which extends to the rear side with respect to the width direction of the vehicle functions as the discharge portion 7. That is, the discharge portion 7 has a function of facilitating the discharge of the foreign material, which gets into the guide portion 6, to the outside of the guide portion 6. The discharge portion 7 has an extension wing which extends obliquely rearward from the inner wall surface of the casing 4. When the length of the extension wing in the width direction of the vehicle is L, a wing length is present as viewed in front of the vehicle and L > 0 is satisfied. In addition, the angle of the discharge portion 7 with respect to the width direction of the vehicle, that is, the angle of the rear side of the extension wing with respect to the width direction of the vehicle is θₐ and the value of θₐ is greater than 0 degrees. When the angle of the rear side of the side portion 2b with respect to the width direction of the vehicle is θ_{b}, θ_{b} > θₐ is satisfied. As such, when the values of L, θₐ, and θ_{b} satisfy the above-mentioned conditions, the sound generated by the target object is reliably input to the microphone 3 and a foreign material, such as wind, rain, or dust, collides with the discharge portion 7 and is discharged in a direction in which it is separated from the microphone 3. In Fig. 2, a solid arrow L1 indicates a discharge path of the foreign material, such as wind, rain, or dust, and a dashed arrow L2 indicates an entrance path of a sound, such as a traveling sound.

As illustrated in Fig. 1, the front-side wall surface of the guide portion 6 is formed so as to extend to the anterolateral side with respect to the width direction of the vehicle. The wall surface which extends to the anterolateral side with respect to the width direction of the vehicle functions as the windshield portion 8. Specifically, the windshield portion 8 protects the microphone 3 from wind which flows in front of the vehicle when the vehicle is traveling. As such, the windshield portion 8 has a function of preventing wind from flowing to the microphone 3.

As described above, the vehicle sound collection structure including the sound collection device 1 according to this embodiment collects a sound generated from a target object, using the microphone 3 which is a sound collector provided in the vehicle, and includes the guide portion 6 that guides the sound generated from the target object to the microphone 3 and the discharge portion 7 that facilitates the discharge of a foreign material, which gets into the guide portion 6, to the outside of the guide portion 6. Therefore, it is possible to prevent a foreign material, such as rain or dust, from being accumulated in the vicinity of the microphone 3. As a result, it is possible to prevent the foreign material from getting into the microphone 3 and to improve a sound collection performance.

In addition, the sound collection device 1 includes the windshield portion 8 that prevents wind from flowing to the microphone 3. Therefore, wind is less likely to flow to the microphone 3 and it is possible to further improve the sound collection performance.

The guide portion 6 is formed such that it becomes gradually wider from the microphone 3 to the outside and is opened in a trumpet shape. Therefore, it is possible to simply form a structure for improving the sound collection performance.

Since the rear-side wall surface of the guide portion 6 includes a portion that extends to the rear side with respect to the width direction of the vehicle, the sound collection device 1 can discharge a foreign material, such as rain or dust that collides with the wall surface of the guide portion 6 extending to the rear side, to the rear side of the vehicle while reliably collecting the sound generated from the target object. Therefore, it is possible to reliably remove a foreign material, such as rain or dust, while preventing the foreign material from approaching the microphone 3. As a result, it is possible to prevent the foreign material from getting into the microphone 3 and to improve the sound collection performance of the microphone 3.

In the sound collection device 1, the front-side wall surface of the guide portion 6 extends to the anterolateral side of the vehicle. Therefore, the flow of wind from the front to the microphone 3 is sufficiently suppressed when the vehicle is traveling. Therefore, wind is less likely to flow to the microphone 3 and it is possible to further improve the sound collection performance.

In the sound collection device 1, the angle θ_{mw} formed between the rear-side wall surface and the front-side wall surface of the guide portion 6 is greater than 30 degrees and less than 60 degrees and the microphone 3 is directed to the anterolateral side such that the angle θ_{mc} of the microphone 3 with respect to the width direction of the vehicle is greater than 0 degrees and less than 30 degrees. Therefore, the direction and opening angle of the microphone 3 are set to optimum values, considering, for example, the angle of another vehicle with respect to the host vehicle, the distribution of the angle between crossroads, and the steering angle of the host vehicle. As a result, it is possible to further improve the sound collection performance while reliably preventing a foreign material from getting into the microphone 3.

In the above-described embodiment, the vehicle sound collection structure and the sound collection device according to the invention have been described. However, the vehicle sound collection structure and the sound collection device according to the invention are not limited to this embodiment. The vehicle sound collection structure and the sound collection device according to this embodiment of the invention may be modified or may be applied to other techniques, without departing from the scope and spirit of the claims.

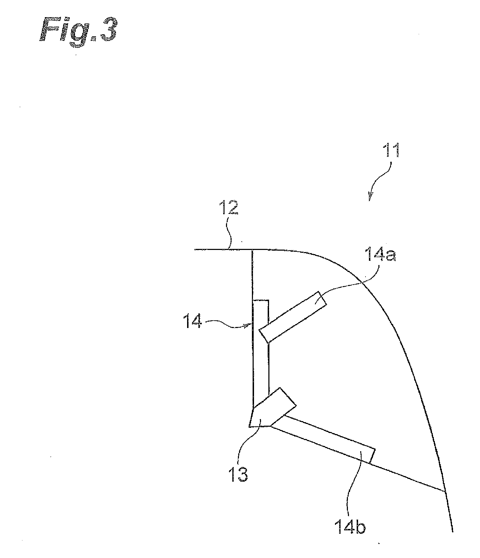

For example, in the above-described embodiment, the example in which the microphone 3 and the guide portion 6 are provided between the front portion 2a and the side portion 2b of the bumper 2 has been described. However, the invention is not limited thereto. For example, as in a sound collection device 11 which is provided in a bumper 12 illustrated in Fig. 3, a case 14 of a microphone 13 may include a windshield portion 14a that extends to the anterolateral side of the vehicle and a discharge portion 14b that extends to the rear side with respect to the width direction of the vehicle.

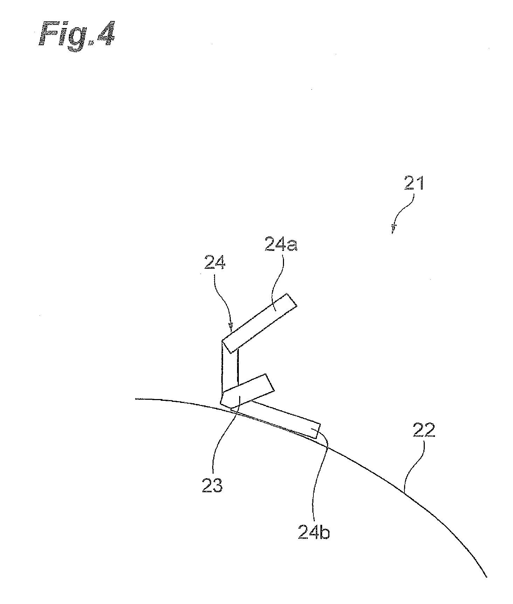

As illustrated in Fig. 4, the vehicle sound collection structure may not be provided, but a sound collection device 21 may be provided separately from the vehicle and may be disposed at a predetermined position, such as an anterolateral surface 22 of the vehicle. In this case, a case 24 of a microphone 23 includes a windshield portion 24a that extends to the anterolateral side at the predetermined position and a discharge portion 24b that extends to the rear side with respect to the left-right direction at the predetermined position. According to this structure, the same effects as that in the above-described embodiment are obtained.

The structure of the discharge portion which facilitates the discharge of an object to the outside of the guide portion is not limited to the above-described embodiment. For example, an object discharge path that extends to the rear side or the posterolateral side may be separately provided in the inner wall of the guide portion and may be used as the discharge portion.

The structure of the windshield portion which prevents the inflow of wind is not limited to the above-described embodiment. For example, a member, such as a windshield filter, may be separately provided in a hollow portion of the bumper and may be used as the windshield portion. In addition, the bumper may be curved like a snail and the curved portion may be used as the windshield portion.

The sound collection device may be attached to, for example, a mirror or a vehicle body, in addition to the bumper. In addition, the sound collection device may be provided in apparatuses other the vehicle in order for a purpose other than the purpose for the vehicle.

The friction coefficient of the wall surface forming the discharge portion 7 (the rear wall surface of the guide portion 6) may be less than that of the front-side wall surface of the guide portion 6. In this case, it is possible to further facilitate the discharge of the foreign material.

### Industrial Applicability

The invention can be used as a vehicle sound collection structure and a sound collection device with an improved sound collection performance.

### Reference Signs List

- 1:: SOUND COLLECTION DEVICE
- 2:: BUMPER
- 2a:: FRONT PORTION
- 2b:: SIDE PORTION
- 3:: MICROPHONE (SOUND COLLECTOR)
- 4:: CASING
- 5:: COVER PORTION
- 6:: GUIDE PORTION
- 7:: DISCHARGE PORTION
- 8:: WINDSHIELD PORTION

## Claims

1. A vehicle sound collection structure that collects a sound generated from a target object using a sound collector provided in a vehicle, comprising:
a guide portion configured to guide the sound generated from the target object to the sound collector; and
a discharge portion configured to facilitate the discharge of a foreign material, which gets into the guide portion, to the outside of the guide portion.

2. The vehicle sound collection structure according to claim 1, further comprising:
a windshield portion configured to prevent wind from flowing to the sound collector.

3. The vehicle sound collection structure according to claim 1 or 2,
wherein the guide portion has a shape in which the guide portion becomes gradually wider from the sound collector to the outside.

4. A vehicle sound collection structure that collects a sound generated from a target object using a sound collector provided in a vehicle, comprising:
a guide portion configured to guide the sound generated from the target object to the sound collector and includes a vehicle-front-side wall surface and a vehicle-rear-side wall surface which are opposite to each other across the sound collector,
wherein the vehicle-rear-side wall surface includes a portion that extends backward in a front-rear direction of the vehicle while extending from the sound collector to the outside.

5. The vehicle sound collection structure according to claim 4,
wherein the vehicle-front-side wall surface of the guide portion extends to an anterolateral side of the vehicle.

6. The vehicle sound collection structure according to claim 4 or 5,
wherein the guide portion has a shape in which the guide portion becomes gradually wider from the sound collector to the outside.

7. The vehicle sound collection structure according to any one of claims 4 to 6,
wherein an angle formed between the vehicle-rear-side wall surface and the vehicle-front-side wall surface of the guide portion is greater than 30 degrees and less than 60 degrees, and
the sound collector is directed to the anterolateral side such that the angle of the sound collector with respect to a width direction of the vehicle is greater than 0 degrees and less than 30 degrees.

8. A sound collection device that is provided at a predetermined position and collects a sound generated from a target object using a sound collector, comprising:
a guide portion configured to guide the sound generated from the target object to the sound collector; and
a discharge portion configured to facilitate the discharge of a foreign material, which gets into the guide portion, to the outside of the guide portion when the sound collection device is provided at the predetermined position.

9. The sound collection device according to claim 8, further comprising:
a windshield portion configured to prevent wind from flowing to the sound collector.

10. The sound collection device according to claim 8 or 9,
wherein the guide portion has a shape in which the guide portion becomes gradually wider from the sound collector to the outside.

11. A sound collection device that is provided at a predetermined position and collects a sound generated from a target object using a sound collector, comprising:
a guide portion that includes wall surfaces which are opposite to each other across the sound collector,
wherein, when the sound collection device is provided at the predetermined position, one of the opposite wall surfaces includes a portion that extends backward in a front-rear direction at the predetermined position while extending from the sound collector to the outside.

12. The sound collection device according to claim 11,
wherein, when the sound collection device is provided at the predetermined position, the guide portion is arranged such that one of the opposite wall surfaces of the guide portion extends to an anterolateral side.

13. The sound collection device according to claim 11 or 12,
wherein the guide portion has a shape in which the guide portion becomes gradually wider from the sound collector to the outside.

14. The sound collection device according to any one of claims 11 to 13,
wherein, when the sound collection device is provided at the predetermined position, an angle formed between a rear-side wall surface and a front-side wall surface of the guide portion is greater than 30 degrees and less than 60 degrees, and
the sound collector is directed to the anterolateral side such that the angle of the sound collector with respect to a left-right direction at the predetermined position is greater than 0 degrees and less than 30 degrees.
